# EUROPÄISCHE PATENTSCHRIFT

(11) **EP 2 130 858 B1**
(45) Veröffentlichungstag und Bekanntmachung des Hinweises auf die Patenterteilung: **25.07.2012**
(21) Anmeldenummer: 08157736.3
(22) Anmeldetag: 06.06.2008
(51) Int. Cl.: C08K 5/14, C07C 409/34, C07C 407/00

(54) **Zubereitungen zur Initiierung von radikalischen Reaktionen**
Preparations to initiate radical reactions
Préparations destinées à l'initiation de réactions radicales

(43) Veröffentlichungstag der Anmeldung: 09.12.2009
(73) Patentinhaber: United Initiators GmbH & Co. KG, 82049 Pullach (DE)
(72) Erfinder: Weinmaier, Josef Helmut, 84453 Mühldorf (DE); Hermann, Dominik, 85221 Dachau (DE); Kunz, Martin, 82544 Dettenhausen (DE)
(74) Vertreter: Dey, Michael

(56) Entgegenhaltungen:
- EP-A- 0 235 537
- EP-A- 1 004 622
- EP-A- 1 233 014
- WO-A-99/36466
- US-A- 1 913 775
- US-A- 5 162 280

## Beschreibung

Gegenstand der Erfindung sind Zubereitungen zur Initiierung von radikalischen Reaktionen, die sich insbesondere zur Heißvernetzung von Silikonkautschuk eignen.

Dibenzoylperoxid und symmetrisch substituierte Dibenzoylperoxide sind dem Fachmann als Initiatoren für radikalische Reaktionen bekannt. Die Initiatorwirkung wird dabei durch Erhitzen erzielt, was zum radikalischen Zerfall des Dibenzoylperoxids unter Bildung von Phenylradikalen bzw. substituierten Phenylradikalen führt.

Technisch wichtige radikalische Reaktionen, die durch Dibenzoylperoxid und symmetrisch substituierte Dibenzoylperoxide initiiert werden können, sind radikalische Polymerisationen und die radikalische Quervernetzung von Polymeren.

Von besonderer Bedeutung ist die Herstellung von heißvulkanisiertem Silikonkautschuk durch Quervernetzen eines Polyorganosiloxans. Die Herstellung von heißvulkanisierten Silikonkautschukartikeln umfasst in der Regel einen Extrusions- oder Spritzgussvorgang mit anschließender Vernetzung bei erhöhter Temperatur innerhalb oder außerhalb einer Form. Dazu wird das Peroxid in einem Kneter oder auf einem Walzenstuhl in den Silikonkautschuk eingemischt und die resultierende Mischung dann auf einem Extruder, einer Spritzgussmaschine, einer Presse oder einer anderen formgebenden Vorrichtung verarbeitet. Nach dieser Formgebung wird dann in der Heißvulkanisation die Vernetzungsreaktion durch Erhöhen der Temperatur über die Zerfallsstemperatur des Peroxids eingeleitet. Bei diesem Verfahren werden üblicherweise die symmetrisch substituierten Dibenzoylperoxide Bis-(2,4-dichlorbenzoyl)-peroxid oder Di-(4-methylbenzoyl)-peroxid als Initiatoren verwendet, die zur besseren Einarbeitung in den Silikonkautschuk üblicherweise als Mischungen mit Silikonöl eingesetzt werden.

EP 1 004 622 beschreibt die Verwendung von Mischungen aus Di-(4-methylbenzoyl)-peroxid und einem oder mehreren Peroxiden aus der Reihe Dibenzoylperoxid, Dicumylperoxid 2,5-Dimethylhexan-2,5-di-tert-butylperoxid und Di-tert-butylperoxid zur Heißvulkanisation von Silikonkautschuk. Die Heißvulkanisation erfolgt dabei unter den gleichen Bedingungen wie mit Di-(4-methylbenzoyl)-peroxid allein. Die mit den Mischungen erhaltenen Produkte zeigen bessere mechanische Eigenschaften, sowie keine Gelbfärbung und geringere Geruchsbelästigung.

WO 99/36466 offenbart die unsymmetrisch substituierten Dibenzoylperoxide o,p'-Bis(methylbenzoyl)peroxid und m,p'-Bis(methylbenzoyl)peroxid als Initiatoren zur Erhöhung der Schmelzeviskosität von Polypropylen.

An Initiatoren für radikalische Reaktionen werden zwei Anforderungen gestellt, die sich in der Regel widersprechen. Der Initiator soll zum Einen eine möglichst niedrige Zerfallstemperatur der Peroxide aufweisen, damit die radikalische Reaktion bei einer niedrigeren Temperatur initiiert werden kann, was Energie spart und temperaturbedingte Verschlechterungen der Produkteigenschaften vermeidet, oder bei der gleichen Temperatur eine raschere Reaktion erzielt werden kann, was zum Beispiel bei der radikalischen Quervernetzung von Polymeren eine Erhöhung der Verarbeitungskapazität ermöglicht. Der Initiator soll zum Anderen aber ausreichend lagerstabil sein, wobei die Stabilität vorzugsweise so groß sein soll, dass der Initiator ohne Kühlung gelagert und transportiert werden kann, was bei einem als Typ D klassifizierten organischen Peroxid eine selbstbeschleunigende Zersetzungstemperatur (SADT, self accelerating decomposition temperature) von mindestens 50 °C und keinen oder einen geringen Effekt beim Erhitzen unter Einschluss bei Tests der Serie E der "Recommendations on the Transport of Dangerous Goods, Manual of Tests and Criteria" der Vereinten Nationen erfordert.

Es wurde nun überraschend gefunden, dass Zubereitungen, die mindestens 50 mol-% eines symmetrischen Dibenzoylperoxids und 0,3 bis 50 mol-% eines unsymmetrischen Dibenzoylperoxids enthalten, eine deutlich niedrigere Zerfallstemperatur der Peroxide als das entsprechende symmetrische Dibenzoylperoxid aufweisen, ohne dass die selbstbeschleunigende Zersetzungstemperatur in gleichem Maß herabgesetzt ist.

Gegenstand der Erfindung ist ein unsymmetrisch substituiertes Dibenzoylperoxid umfassend einen 2,4-Dichlorbenzoylrest und einen substituierten Benzoylrest ausgewählt aus der Gruppe bestehend aus 2-Chlorbenzoyl, 3-Chlorbenzoyl, 4-Chlorbenzoyl, 2,3-Dichlorbenzoyl, 2,5-Dichlorbenzoyl, 2,6-Dichlorbenzoyl, 3,4-Dichlorbenzoyl, 3,5-Dichlorbenzoyl, 2,3,4-Trichlorbenzoyl, 2,3,5-Trichlorbenzoyl, 2,3,6 Trichlorbenzoyl, 2,4,5-Trichlorbenzoyl, 2,4,6-Trichlorbenzoyl, 3,4,5-Trichlorbenzoyl, 2,3,4,5-Tetrachlorbenzoyl, 2,3,4,6-Tetrachlorbenzoyl, 2,3,5,6-Tetrachlorbenzoyl und Pentachlorbenzoyl.

Ferner wird eine Zubereitung zur Initiierung von radikalischen Reaktionen, die eine Mischung von Dibenzoylperoxiden umfasst, wobei die Mischung von Dibenzoylperoxiden von 50 bis 99,7 mol-% an einem symmetrischen Dibenzoylperoxid und 0,3 bis 50 mol-% unsymmetrische Dibenzoylperoxide enthält, beschrieben.

Auch die Verwendung der erfindungsgemäßen Zubereitung zur Heißvernetzung von Silikonkautschuk, sowie ein Verfahren zur Herstellung der erfindungsgemäßen Zubereitung, das die Umsetzung einer Mischung aus Bezoylchloriden, enthaltend ein erstes Benzoylchlorid und ein davon verschiedenes zweites Benzoylchlorid, mit Wasserstoffperoxid umfasst, wobei die Mischung der Benzoylchloride 70 bis 99,7 mol-% des ersten Benzoylchlorids und 0,3 bis 30 mol-% des zweiten Benzoylchlorids enthält, wird beschrieben.

Ferner werden neue unsymmetrisch substituierte Dibenzoylperoxide, die einen 4-Methylbenzoylrest und einen substituierten Benzoylrest aus der Gruppe 2,3-Dimethylbenzoyl, 2,4-Dimethylbenzoyl, 2,5-Dimethylbenzoyl, 2,6-Dimethylbenzoyl, 3,4-Dimethylbenzoyl, 3,5-Dimethylbenzoyl, 2,3,4-Trimethylbenzoyl, 2,3,5-Trimethylbenzoyl, 2,3,6-Trimethylbenzoyl, 2,4,5-Trimethylbenzoyl, 2,4,6-Trimethylbenzoyl, 3,4,5-Trimethylbenzoyl, 2,3,4,5-Tetramethylbenzoyl, 2,3,4,6-Tetramethylbenzoyl, 2,3,5,6-Tetramethylbenzoyl und Pentamethylbenzoyl enthalten, beschrieben.

Die Zubereitung zur Initiierung von radikalischen Reaktionen umfasst eine Mischung von Dibenzoylperoxiden. Diese Mischung von Dibenzoylperoxiden enthält von 50 bis 99,7 mol-% an einem symmetrischen Dibenzoylperoxid und 0,3 bis 50 mol-% unsymmetrische Dibenzoylperoxide. Symmetrische Dibenzoylperoxide sind unsubstituiertes Dibenzoylperoxid und substituierte Dibenzoylperoxide, die zwei gleich substituierte Benzoylreste aufweisen. Unsymmetrische Dibenzoylperoxide im Sinne der Erfindung sind Dibenzoylperoxide, die einen unsubstituierten und einen substituierten Benzoylrest oder zwei unterschiedlich substituierte Benzoylreste aufweise. Das symmetrische Dibenzoylperoxid kann ein substituiertes Dibenzoylperoxide mit zwei gleich substituierten Benzoylresten sein.

Die Mischung kann 80 bis 97 mol-% an einem symmetrischen Dibenzoylperoxid und 1 bis 20 mol-% unsymmetrische Dibenzoylperoxide enthalten. Durch die Wahl der Anteile an symmetrischem Dibenzoylperoxid und unsymmetrischen Dibenzoylperoxiden lässt sich eine gegenüber dem symmetrischen Dibenzoylperoxid deutlich verringerte Zerfallstemperatur der Peroxide erreichen, ohne dass die selbstbeschleunigende Zersetzungstemperatur in gleichem Maß herabgesetzt ist.

Die unsymmetrischen Dibenzoylperoxide der Mischung enthalten einen Benzoylrest, der das gleiche Substitutionsmuster aufweist wie der Benzoylrest des in der Mischung enthaltenen symmetrischen Dibenzoylperoxids. Diese hat den Vorteil, dass die bei dem Zerfall der in der Mischung enthaltenen Benzoylperoxide gebildeten Produkte sich nur in geringem Maß von den beim Zerfall des symmetrischen Dibenzoylperoxids gebildeten Produkten unterscheiden. Solche Zubereitungen können deshalb an Stelle von Zubereitungen eingesetzt werden, die nur das symmetrische Dibenzoylperoxid enthalten, ohne dass es zu Veränderungen in den Eigenschaften der mit der Zubereitung hergestellten Endprodukte kommt.

Neben dem zu 50 bis 99,7 mol-% enthaltenen symmetrischen Dibenzoylperoxid kann die Mischung noch weitere symmetrische Dibenzoylperoxide enthalten. der Anteil an weiteren symmetrischen Dibenzoylperoxiden an der Mischung kann jedoch weniger als 5 mol-%, besonders bevorzugt weniger als 1 mol-% , betragen.

Die Zubereitung kann Bis- (2,4-dichlorbenzoylperoxid als symmetrisches Dibenzoylperoxid enthalten. Eine solche Zubereitung ermöglicht das Heißvulkanisieren von Silikonkautschuk mit besonders hoher Vernetzungsgeschwindigkeit.

Insbesondere werden Zubereitungen, die Bis-(2,4-dichlorbenzoyl)-peroxid und ein unsymmetrisches Dibenzoylperoxid enthalten, wobei das unsymmetrische Dibenzoylperoxid einen 2,4-Dichlorbenzoylrest und einen Rest aus der Gruppe Benzoyl, 2-Chlorbenzoyl, 3-Chlorbenzoyl, 4-Chlorbenzoyl, 2,3-Dichlorbenzoyl, 2,5-Dichlorbenzoyl, 2,6-Dichlorbenzoyl, 3,4-Dichlorbenzoyl, 3,5-Dichlorbenzoyl, 2,3,4-Trichlorbenzoyl, 2,3,5-Trichlorbenzoyl, 2,3,6-Trichlorbenzoyl, 2,4,5-Trichlorbenzoyl, 2,4,6-Trichlorbenzoyl, 3,4,5-Trichlorbenzoyl, 2,3,4,5-Tetrachlorbenzoyl, 2,3,4,6-Tetrachlorbenzoyl, 2,3,5,6-Tetrachlorbenzoyl und Pentachlorbenzoyl enthält, genannt. Diese Zubereitungen können ohne Rezepturveränderungen an Stelle von reinem Bis-(2,4-dichlorbenzoyl)-peroxid zum Heißvulkanisieren von Silikonkautschuk eingesetzt werden und ermöglichen gegenüber Bis-(2,4-dichlorbenzoyl)-peroxid eine erhöhte Vernetzungsgeschwindiqkeit.

Ferner wird eine Zubereitung beschrieben, die Di-(4-methylbenzoyl)-peroxid als symmetrisches Dibenzoylperoxid, enthält.

Zubereitungen, die Di-(4-methylbenzoyl)-peroxid und ein unsymmetrisches Dibenzoylperoxid enthalten, wobei das unsymmetrische Dibenzoylperoxid einen 4-Methylbenzoylrest und einen Rest aus der Gruppe Benzoyl, 2-Methylbenzoyl, 3-Methylbenzoyl, 2,3-Dimethylbenzoyl, 2,4-Dimethylbenzoyl, 2,5-Dimethylbenzoyl, 2,6-Dimethylbenzoyl, 3,4-Dimethylbenzoyl, 3,5-Dimethylbenzoyl, 2,3,4-Trimethylbenzoyl, 2,3,5-Trimethylbenzoyl, 2,3,6-Trimethylbenzoyl, 2,4,5-Trimethylbenzoyl, 2,4,6-Trimethylbenzoyl, 3,4,5-Trimethylbenzoyl, 2,3,4,5-Tetramethylbenzoyl, 2,3,4,6-Tetramethylbenzoyl, 2,3,5,6-Tetramethylbenzoyl und Pentamethylbenzoyl enthält, werden beschrieben. Diese Zubereitungen ermöglicht das Heißvulkanisieren von Silikonkautschuk mit hoher Vernetzungsgeschwindigkeit ohne die Bildung von chlorierten Folgeprodukten des Initiators.

Die Zubereitung kann zusätzlich zu der Mischung von Dibenzoylperoxiden noch weitere Bestandteile enthalten, wie z.B. stabilisierende und phlegmatisierende Verbindungen, die eine Zersetzung der Dibenzoylperoxide bei Temperaturen unterhalb der Zersetzungstemperatur verhindern oder verlangsamen. Die Zubereitung kann zusätzlich zu der Mischung von Dibenzoylperoxiden noch Wasser oder Silikonöl enthalten.Die Zubereitungen, können 10 bis 60 Gew.-% der Mischung von Dibenzoylperoxiden und 40 bis 90 Gew.-% Silikonöl enthalten, und neben diesen Anteilen an Dibenzoylperoxiden und Silikonöl weniger als 1 Gew.-% Wasser enthalten. Die Zubereitungen aus Dibenzoylperoxiden und Silikonöl mit geringem Wasseranteil eignen sich besonders zur Initiierung von radikalischen Reaktionen in unpolaren Medien, z. B. in Schmelzen oder Lösungen von unpolaren Polymeren.

Die Zubereitungen werden zur Heißvernetzung von Silikonkautschuk verwendet, wobei Zubereitungen verwendet werden, die 10 bis 60 Gew.-% der Mischung von Dibenzoylperoxiden und 40 bis 90 Gew.-% Silikonöl enthalten. Mit den Zubereitungen lässt sich bei der Heißvernetzung von Silikonkautschuk gegenüber Zubereitungen mit nur einem symmetrischen Dibenzoylperoxid die Verarbeitungsgeschwindigkeit erhöhen, da die Zerfallstemperatur der Peroxide rascher erreicht wird und die Vernetzung rascher abläuft.

Die Zubereitungen lassen sich durch Mischen eines symmetrischen Dibenzoylperoxids und eines unsymmetrischen Dibenzoylperoxids, sowie optional weiterer Komponenten herstellen.

Vorzugsweise werden die Zubereitungen jedoch nach dem Verfahren hergestellt, indem eine Mischung von Benzoylchloriden, enthaltend ein erstes Benzoylchlorid und ein davon verschiedenes zweites Benzoylchlorid, mit Wasserstoffperoxid umgesetzt wird, wobei die Mischung der Benzoylchloride 70 bis 99,7 mol-% des ersten Benzoylchlorids und 0,3 bis 30 mol-% des zweiten Benzoylchlorids enthält. Der Begriff Benzoylchlorid umfasst sowohl unsubstituiertes Benzoylchlorid als auch substituierte Benzoylchloride. Die Mischung der Benzoylchloride enthält dabei vorzugsweise 90 bis 98 mol-% des ersten Benzoylchlorids und 2 bis 10 mol-% des zweiten Benzoylchlorids. Zur Bindung des bei der Umsetzung freiwerdenden Chlorwasserstoffs wird vorzugsweise vor oder während der Umsetzung eine Base in mindestens stöchiometrischer Menge zugesetzt, wie z.B. wässrige Natronlauge. Die Base kann zusammen mit Wasserstoffperoxid vorgelegt und die Mischung der Benzoylchloride während der Umsetzung zudosiert werden oder es wird Wasserstoffperoxid vorgelegt und die Benzoylchloride und die Base werden parallel zudosiert. An Stelle der Mischung der Benzoylchloride können alternativ auch die beiden Benzoylchloride getrennt parallel zudosiert werden.

Die Benzoylchloride und Wasserstoffperoxid können in einem Molverhältnis von 2 : 1 bis 2 : 4, besonders bevorzugt 2 : 1 bis 2 : 1,5 eingesetzt werden. Das Molverhältnis von Benzoylchloriden zu Base liegt z.B. im Bereich von 1 : 1 bis 1 : 2, besonders bevorzugt 1 : 1 bis 1 : 1,5. Die Zugabe der Base erfolgt z.B. so, dass sich in der wässrigen Phase der Reaktionsmischung ein pH-Wert im Bereich von 8 bis 14, oder 10 bis 14 ergibt. Die Umsetzung erfolgt z.B. bei einer Temperatur im Bereich von -10 bis 50 °C, besonders bevorzugt 0 bis 40 °C.

Zum Beispiel wird Bis-(2,4-dichlorbenzoyl)-peroxid als erstes Benzoylchlorid eingesetzt. Als erstes Benzoylchlorid kann Bis-(2,4-dichlorbenzoyl)-peroxid und als zweites Benzoylchlorid eine Verbindung aus der Reihe Benzoylchlorid, 2-Chlorbenzoylchlorid, 3-Chlorbenzoylchlorid, 4-Chlorbenzoylchlorid, 2,3-Dichlorbenzoylchlorid, 2,5-Dichlorbenzoylchlorid, 2,6-Dichlorbenzoylchlorid, 3,4-Dichlorbenzoylchlorid, 3,5-Dichlorbenzoylchlorid, 2,3,4-Trichlorbenzoylchlorid, 2,3,5-Trichlorbenzoylchlorid, 2,3,6-Trichlorbenzoylchlorid, 2,4,5-Trichlorbenzoylchlorid, 2,4,6-Trichlorbenzoylchlorid, 3,4,5-Trichlorbenzoylchlorid, 2,3,4,5-Tetrachlorbenzoylchlorid, 2,3,4,6-Tetrachlorbenzoylchlorid, 2,3,5,6-Tetrachlorbenzoylchlorid und Pentachlorbenzoylchlorid eingesetzt, werden.

Ferner kann auch 4-Methylbenzoylchlorid als erstes Benzoylchlorid eingesetzt werden. Beispielsweise wird als erstes Benzoylchlorid 4-Methylbenzoylchlorid und als zweites Benzoylchlorid eine Verbindung aus der Reihe Benzoylchlorid, 2-Methylbenzoylchlorid, 3-Methylbenzoylchlorid, 2,3-Dimethylbenzoylchlorid, 2,4-Dimethylbenzoylchlorid, 2,5-Dimethylbenzoylchlorid, 2,6-Dimethylbenzoylchlorid, 3,4-Dimethylbenzoylchlorid, 3,5-Dimethylbenzoylchlorid, 2,3,4-Trimethylbenzoylchlorid, 2,3,5-Trimethylbenzoylchlorid, 2,3,6-Trimethylbenzoylchlorid, 2,4,5-Trimethylbenzoylchlorid, 2,4,6-Trimethylbenzoylchlorid, 3,4,5-Trimethylbenzoylchlorid, 2,3,4,5-Tetramethylbenzoylchlorid, 2,3,4,6-Tetramethylbenzoylchlorid, 2,3,5,6-Tetramethylbenzoylchlorid und Pentamethylbenzoylchlorid eingesetzt.

Die Herstellung von Zubereitungen, die zusätzlich zu der Mischung von Dibenzoylperoxiden noch Silikonöl enthalten, erfolgt vorzugsweise nach den in den Beispielen von EP 235 537 beschriebenen Verfahren.

Die folgenden Beispiele illustrieren die Erfindung, ohne jedoch den Gegenstand der Erfindung zu beschränken.

### Beispiele:

### Bestimmung der Zerfallstemperatur

Die Zerfallstemperatur der peroxidhaltigen Zubereitungen wurde durch Differentialthermoanalyse mit einem Gerät DSC20 der Firma Mettler bestimmt. Dazu wurden ca. 3 mg Probe in einen offenen 40 µl Aluminiumtiegel eingewogen, auf 70 °C temperiert und mit 1 °C/min auf 150 °C erhitzt. Die Zerfallstemperatur ist die Temperatur, bei der während des Aufheizens die maximale Exothermie bestimmt wurde.

### Beispiel 1

### Wasserfeuchte Zubereitung enthaltend

### Bis-(2,4-dichlorbenzoyl)-peroxid und 2-Chlorbenzoyl-2,4-dichlorbenzoyl-peroxid

125 g 2,4-Dichlorbenzoylchlorid, 6,6 g
2-Chlorbenzoylchlorid und 35 g Isohexan wurden gemischt und unter Rühren und Kühlung bei 20 °C zu einer Mischung aus 180 g Wasser, 132 g 25 Gew.-% Natronlauge und 21 g 70 Gew.-% Wasserstoffperoxid gegeben. Nach der Zugabe wurde weitere 30 Minuten gerührt, filtriert und der Feststoff mit Wasser gewaschen.

In gleicher Weise wurden Zubereitungen aus Mischungen von 2,4-Dichlorbenzoylchlorid und 2-Chlorbenzoylchlorid hergestellt, in denen der Anteil an 2-Chlorbenzoylchlorid 1, 2, 10 und 20 Gew.-% an Stelle von 5 Gew.-% betrug. Tabelle 1 zeigt die für die Zubereitungen bestimmten Zerfallstemperaturen im Vergleich zu einer Zubereitung, die als Peroxid nur Bis-(2,4-dichlorbenzoyl)-peroxid enthielt.

**Tabelle 1**

| Zerfallstemperatur von wasserfeuchten Zubereitungen enthaltend Bis-(2,4-dichlorbenzoyl)-peroxid und 2-Chlorbenzoyl-2,4-dichlorbenzoyl-peroxid | |
|---|---|
| Anteil an 2-Chlorbenzoylchlorid in der eingesetzten Mischung mit 2,4-Dichlorbenzoylchlorid in Gew.-% | Zerfallstemperatur in °C |
| 0* | 101, 5 |
| 1 | 100, 5 |
| 2 | 99 |
| 5 | 97 |
| 10 | 94 |
| 20 | 88 |

| | |
|---|---|
| *nicht erfindungsgemäß | |

### Beispiel 2

### Zubereitung enthaltend Bis-(2,4-dichlorbenzoyl)-peroxid, 2-Chlorbenzoyl-2,4-dichlorbenzoyl-peroxid und Silikonöl

Zu einer Mischung aus 3,75 kg Wasser, 485 g 35 Gew.-% Wasserstoffperoxid, 243 g Silikonöl AK 350 der Firma Wacker und 1134 g 25 Gew.-% Natronlauge wurde innerhalb von 30 min unter starkem Rühren und Kühlen auf 10 bis 20 °C eine Mischung aus 854 g 2,4-Dichlorbenzoylchlorid, 45 g 2-Chlorbenzoylchlorid, 500 g Silikonöl AK 350 der Firma Wacker und 203 g Isohexan zugegeben. Es wurde weitere 30 min gerührt, die wässrige Phase abgetrennt und das Produkt dreimal mit je 8 1 Wasser gewaschen. Das pastöse Produkt wurde mit wenig Natronlauge neutralisiert und in einem Kneter bei 30 °C unter Durchleiten von Luft 4 h geknetet um Restfeuchte zu verdunsten. Anschließend wurde so viel weiteres Silikonöl zugesetzt, dass der Gehalt an organischem Peroxid im Bereich von 49 bis 52 Gew.-% lag.

In gleicher Weise wurden Zubereitungen aus Mischungen von 2,4-Dichlorbenzoylchlorid und 2-Chlorbenzoylchlorid hergestellt, in denen der Anteil an 2-Chlorbenzoylchlorid 1, 3, 10 und 20 Gew.-% an Stelle von 5 Gew.-% betrug.

Tabelle 2 zeigt die für die Zubereitungen bestimmten Zerfallstemperaturen im Vergleich zu einer Zubereitung, die als Peroxid nur Bis-(2,4-dichlorbenzoyl)-peroxid enthielt.

**Tabelle 2**

| Zerfallstemperatur von Zubereitungen enthaltend Bis-(2,4-dichlorbenzoyl)-peroxid, 2-Chlorbenzoyl-2,4-dichlorbenzoyl-peroxid und Silikonöl | |
|---|---|
| Anteil an 2-Chlorbenzoylchlorid in der eingesetzten Mischung mit 2,4-Dichlorbenzoylchlorid in Gew.-% | Zerfallstemperatur in °C |
| 0* | 103 |
| 3 | 99 |
| 5 | 96 |
| 10 | 94 |
| 20 | 84 |

| | |
|---|---|
| *nicht erfindungsgemäß | |

Für die Zubereitungen, die ausgehend von Mischungen von 2,4-Dichlorbenzoylchlorid und 2-Chlorbenzoylchlorid mit Anteilen an 2-Chlorbenzoylchlorid von 3, 5 und 10 Gew.-% hergestellt wurden, wurde die SADT mit Test H.4 der "Recommendations on the Transport of Dangerous Goods, Manual of Tests and Criteria" der Vereinten Nationen bestimmt. Für alle drei Zubereitungen betrug die SADT mehr als 50 °C. Diese Zubereitungen dürfen deshalb ohne Kühlung gelagert und transportiert werden.

### Beispiel 3

### Zubereitung enthaltend Bis-(2,4-dichlorbenzoyl)-peroxid, 4-Chlorbenzoyl-2,4-dichlorbenzoyl-peroxid und Silikonöl

Beispiel 2 wurde wiederholt, jedoch mit 4-Chlorbenzoylchlorid an Stelle von 2-Chlorbenzoylchlorid.

Für die erhaltene Zubereitung wurde eine Zerfallstemperatur von 93 °C bestimmt.

Für eine analoge Zubereitung aus Di-4-chlorbenzoyl-peroxid und Silikonöl wurde eine Zerfallstemperatur von 137 °C bestimmt.

### Beispiel 4

### Zubereitung enthaltend Bis-(2,4-dichlorbenzoyl)-peroxid, 2,3-Dichlorbenzoyl-2,4-dichlorbenzoyl-peroxid und Silikonöl

Die Herstellung der Zubereitung erfolgte analog Beispiel 2 mit einer Mischung aus 891,5 g 2,4-Dichlorbenzoylchlorid und 8,2 g 2,3-Dichlorbenzoylchlorid.

Für die erhaltene Zubereitung wurde eine Zerfallstemperatur von 100 °C bestimmt.

### Beispiel 5

### Zubereitung enthaltend Bis-(2,4-dichlorbenzoyl)-peroxid, 2,4-Dichlorbenzoyl-2,6-dichlorbenzoyl-peroxid und Silikonöl

Die Herstellung der Zubereitung erfolgte analog Beispiel 2 mit einer Mischung aus 891 g 2,4-Dichlorbenzoylchlorid und 9,0 g 2,6-Dichlorbenzoylchlorid.

Für die erhaltene Zubereitung wurde eine Zerfallstemperatur von 102 °C bestimmt.

### Beispiel 6

### Zubereitung enthaltend Bis-(2,4-dichlorbenzoyl)-peroxid, 2,4-Dichlorbenzoyl-3,4-dichlorbenzoyl-peroxid und Silikonöl

Die Herstellung der Zubereitung erfolgte analog Beispiel 2 mit einer Mischung aus 891 g 2,4-Dichlorbenzoylchlorid und 12,3 g 3,4-Dichlorbenzoylchlorid.

Für die erhaltene Zubereitung wurde eine Zerfallstemperatur von 99 °C bestimmt.

### Vergleichs-Beispiel 7

### Zubereitung enthaltend Di-(4-methylbenzoyl)-peroxid, 2-Methylbenzoyl-4-methylbenzoyl-peroxid und Silikonöl

Zu einer Mischung aus 6,29 kg Wasser, 507 g 35 Gew.-% Wasserstoffperoxid, 270 g Silikonöl AK 350 der Firma Wacker und 1890 g 25 Gew.-% Natronlauge wurde innerhalb von 30 min unter starkem Rühren und Kühlen auf 10 bis 20 °C eine Mischung aus 1040 g 4-Methylbenzoylchlorid, 114 g 2-Methylbenzoylchlorid, 589 g Silikonöl AK 350 der Firma Wacker und 247 g Isohexan zugegeben. Es wurde weitere 30 min gerührt, die wässrige Phase abgetrennt und das Produkt dreimal mit je 10 1 Wasser gewaschen. Das pastöse Produkt wurde mit wenig Natronlauge neutralisiert und in einem Kneter bei 30 °C unter Durchleiten von Luft 4 h geknetet um Restfeuchte zu verdunsten. Anschließend wurde so viel weiteres Silikonöl zugesetzt, dass der Gehalt an organischem Peroxid im Bereich von 49 bis 52 Gew.-% lag.

In gleicher Weise wurde eine Zubereitung aus einer Mischung von 4-Methylbenzoylchlorid und 2-Methylbenzoylchlorid hergestellt, in der der Anteil an 2-Methylbenzoylchlorid 20 Gew.-% an Stelle von 10 Gew.-% betrug.

Tabelle 3 zeigt die für die Zubereitungen bestimmten Zerfallstemperaturen im Vergleich zu einer Zubereitung, die als Peroxid nur Di-(4-methylbenzoyl)-peroxid enthielt.

**Tabelle 3**

| Zerfallstemperatur von Zubereitungen enthaltend Di-(4-methylbenzoyl)-peroxid, 2-Methylbenzoyl-4-methylbenzoyl-peroxid und Silikonöl | |
|---|---|
| Anteil an 2-Methylbenzoylchlorid in der eingesetzten Mischung mit 4-Methylbenzoylchlorid in Gew.-% | Zerfallstemperatur in °C |
| 0* | 136 |
| 10 | 128 |
| 20 | 123 |

| | |
|---|---|
| *nicht erfindungsgemäß | |

## Patentansprüche

1. Unsymmetrisch substituiertes Dibenzoylperoxid umfassend einen 2,4-Dichlorbenzoylrest und einen substituierten Benzoylrest ausgewählt aus der Gruppe bestehend aus 2-Chlorbenzoyl, 3-Chlorbenzoyl, 4-Chlorbenzoyl, 2,3-Dichlorbenzoyl, 2,5-Dichlorbenzoyl, 2,6-Dichlorbenzoyl, 3,4-Dichlorbenzoyl, 3,5-Dichlorbenzoyl, 2,3,4-Trichlorbenzoyl, 2,3,5-Trichlorbenzoyl, 2,3,6-Trichlorbenzoyl, 2,4,5-Trichlorbenzoyl, 2,4,6-Trichlorbenzoyl, 3,4,5-Trichlorbenzoyl, 2,3,4,5-Tetrachlorbenzoyl, 2,3,4,6-Tetrachlorbenzoyl, 2,3,5,6-Tetrachlorbenzoyl und Pentachlorbenzoyl.

## Claims

1. An asymmetrically substituted dibenzoyl peroxide comprising a 2,4-dichlorobenzoyl residue and a substituted benzoyl residue selected from the group consisting of 2-chlorobenzoyl, 3-chlorobenzoyl, 4chlorobenzoyl, 2,3-dichlorobenzoyl, 2,5-dichlorobenzoyl, 2,6-dichlorobenzoyl, 3,4-dichlorobenzoyl, 3,5-dichlorobenzoyl, 2,3,4-trichlorobenzoyl, 2,3,5trichlorobenzoyl, 2,3,6-trichlorobenzoyl, 2,4,5trichlorobenzoyl, 2,4,6-trichlorobenzoyl, 3,4,5trichlorobenzoyl, 2,3,4,5-tetrachlorobenzoyl, 2,3,4,6-tetrachlorobenzoyl, 2,3,5,6-tetrachlorobenzoyl and pentachlorobenzoyl.

## Revendications

1. Peroxyde de dibenzoyle substitué non symétrique, comprenant un reste 2,4-dichlorobenzoyle et un reste benzoyle substitué choisi parmi le groupe consistant en 2-chlorobenzoyle, 3-chlorobenzoyle, 4-chlorobenzoyle, 2,3-dichlorobenzoyle, 2,5-dichlorobenzoyle, 2,6-dichlorobenzoyle, 3,4-dichlorobenzoyle, 3,5-dichlorobenzoyle, 2,3,4-trichlorobenzoyle, 2,3,5-trichlorobenzoyle, 2,3,6-trichlorobenzoyle, 2,4,5-trichlorobenzoyle, 2,4,6-trichlorobenzoyle, 3,4,5-trichlorobenzoyle, 2,3,4,5-tétrachlorobenzoyle, 2,3,4,6-tétrachlorobenzoyle, 2,3,5,6-tétrachlorobenzoyle et pentachlorobenzoyle.
